Europäisches Patentamt

European Patent Office

Office européen des brevets

(11) Publication number: **0 066 553**
**B1**

(12) **EUROPEAN PATENT SPECIFICATION**

(45) Date of publication of patent specification: **31.05.89**

(51) Int. Cl.⁴: **G 05 D 23/24, F 25 B 49/00**

(21) Application number: **82830129.1**

(22) Date of filing: **13.05.82**

(54) **Control system for improving the efficiency of cooling or heating appliances.**

(30) Priority: **15.05.81 IT 6765081**

(43) Date of publication of application:
**08.12.82 Bulletin 82/49**

(45) Publication of the grant of the patent:
**31.05.89 Bulletin 89/22**

(84) Designated Contracting States:
**DE FR GB NL SE**

(56) References cited:
**EP-A-0 061 104**
**FR-A-2 336 729**
**FR-A-2 348 451**
**FR-A-2 381 984**
**GB-A- 720 779**
**GB-A- 859 060**
**US-A-2 705 876**
**US-A-2 733 574**
**US-A-2 791 099**
**US-A-3 196 629**
**US-A-3 464 226**
**US-A-3 537 272**
**US-A-3 577 743**
**US-A-3 786 648**

(73) Proprietor: **INDESIT S.r.l.**
**Via 1. Maggio, 8**
**I-10040 Rivalta (IT)**

(72) Inventor: **Alluto, Luigi**
**Via Montebianco 24**
**I-10024 Moncalieri (Torino) (IT)**

(74) Representative: **Quinterno, Giuseppe et al**
**c/o Jacobacci-Casetta & Perani S.p.A. Via Alfieri, 17**
**I-10121 Torino (IT)**

## Description

The present invention relates to a system for controlling the flow of refrigerating fluid in a cooling or heating appliance as defined in the preamble of annexed claim 1.

According to FR—A—2,336,729, in order to keep the temperature difference across the evaporator of a refrigerating system at a substantially constant level a proportional continuously adjustable expansion valve is used for laminating the refrigerating fluid at the inlet of the evaporator. A control device drives the said expansion valve as a function of the temperature at the inlet and the outlet of the evaporator detected by means of two temperature sensors. In the operation the pressure difference across the said expansion valve is considerably high and the valve is therefore an expensive one.

US—A—3,786,648 discloses a cooling system with two compartments to be cooled independently by two parallel refrigerating circuits, each including the series connection of a flow control valve and a capillary tube. The said flow control valves are operated only in an on/off switching mode and serve firstly for selecting the compartment to be cooled; furthermore, when the compressor is off they are left open in order to have no pressure difference across the compressor allowing an easy restart of the same.

With a view to overcoming the drawbacks of the prior art systems, the system for controlling the flow of the refrigerating fluid in a cooling or heating appliance according to the invention is characterised by the features defined in the attached claim 1.

The invention will now be described with reference to the attached drawings, provided by way of a non-limiting example, in which:

—Figure 1 shows a Mollier diagram of the thermodynamic cycle of a cooling or heating appliance;

—Figure 2 shows a diagram of a referigerator or freezer provided with a control system according to the present invention;

—Figure 3 shows a diagram of a refrigerator with a water-drowned condenser, provided with a system according to the present invention;

—Figure 4 shows a diagram of a heat pump provided with a system according to the present invention;

—Figure 5 shows a diagram of a refrigerator with two compartments (fresh food and freezer), a single compressor and two independently-operating parallel evaporators, provided with a system according to the present invention;

—Figure 6 shows a diagram of a two-door refrigerator with two compartments (fresh food and freezer), a single compressor and two series-connected evaporators, provided with a system according to the invention;

—Figure 7 is a diagram of temperatures at significant points of the refrigerator shown in Figure 6;

—Figure 8 shows the electric diagram of an electronic control circuit used in connection with the refrigerator shown in Figure 6.

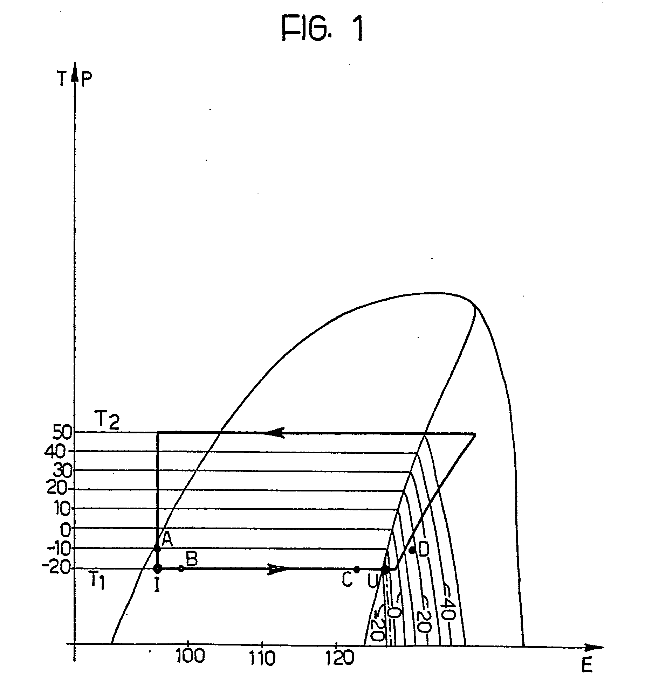

Figure 1 shows a thermodynamic cycle of a refrigerating fluid in a Mollier diagram of temperature T as a function of enthalpy E. As it is known, to improve the efficiency of such a cycle, the refrigerating fluid is also super-heated and subcooled. The cycle points marked "I" and "U" represent the state of the refrigerating fluid at the evaporator inlet and outlet respectively. As already explained, changes in load and external temperature affect both the flow rate of refrigerating fluid and its temperature at the inlet and outlet of the evaporator, that is to say, point "I" may vary around A and B and point "U" around C and D. According to the present invention for optimum operation a predetermined temperature difference between points "U" and "I" (i.e. the amount by which the fluid must be overheated at the outlet as compared with the inlet of the evaporator) is kept constant throughout the operation of the appliance.

Thus the present invention ensures that the cooling capacity of the evaporator is fully exploited under all operating conditions.

For the accurate adjustment of the flow rate of the refrigerating fluid temperature sensors at the inlet and outlet of the evaporator are needed; furthermore, it is necessary that the flow of refrigerating fluid may be adjusted continuously.

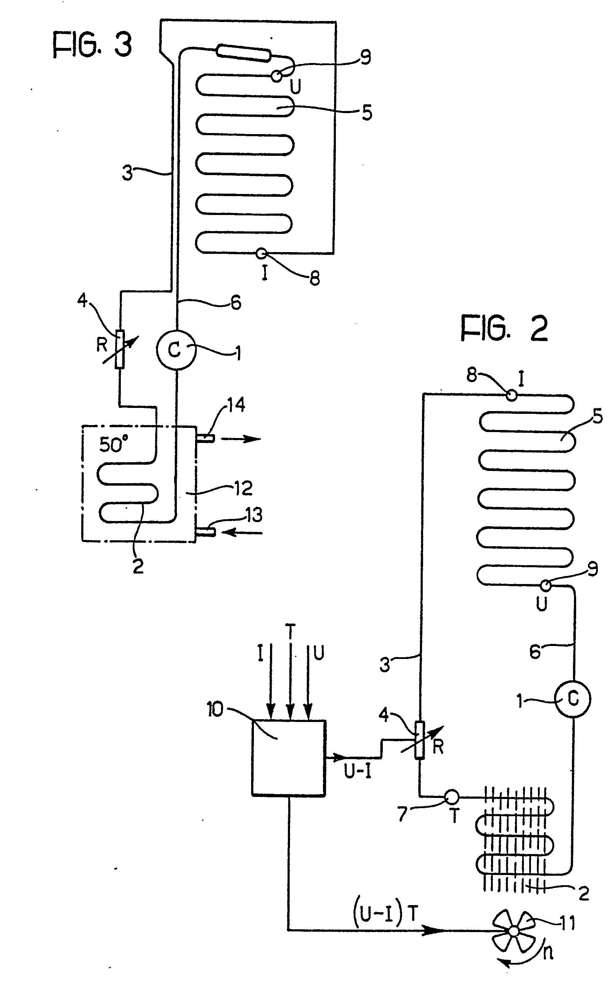

Figure 2 shows the diagram of a refrigerator with a compressor 1, a condenser 2 connected to the outlet of said compressor, a capillary tube 3 connected to the outlet of the condenser 2 and having dimensions such as that the fluid can flow therethrough at a predetermined maximum flow rate value, a flow control valve 4 inserted in the capillary tube 3 for continuous adjustment of the flow in the tube, an evaporator 5 connected to the capillary tube 3, a return pipe 6 connecting the outlet of the evaporator 5 to the compressor 1, three temperature sensors 7—9 such as negative-temperature-coefficient (NTC) resistors, the first sensor 7 being coupled to the condenser 2, the second sensor 8 to the inlet of the evaporator 5 and the third sensor 9 to the outlet of evaporator 5, an electronic control circuit 10 for driving the flow control valve 4 and, finally, a fan 11.

During operation, the temperature difference between the above defined points U and I in the Mollier diagram is set to 6°C, which laboratory tests have shown to result in optimum operation of the refrigerator. As soon as said temperature difference falls below 6°C (indicating that liquid is still present at the evaporator outlet, and therefore that the flow is too high), the control circuit 10 causes valve 4 to reduce the flow of the refrigerating fluid.

Conversely, if the said temperature difference exceeds 6°C (indicating that superheated vapor is present at the evaporator outlet, i.e. insufficient fluid flow), the control circuit 10 causes valve 4 to increase the flow of the refrigerating fluid. A too high flow, accompanied by a drop of the said temperature difference may be caused by a light load or a rise in external temperature. Conversely, a too low flow, accompanied by a rise of the said temperature difference may be caused by a full load or a drop of the external temperature.

As we have seen, in each of these cases (which are all possible), the flow of the refrigerating fluid is regulated automatically. If it tends to rise, the system brings it down, if it tends to fall, the system increases it.

In the case of an excessive flow, the said automatic adjustment also prevent frosting of the return pipe 6.

The diagram shown in Figure 2 could also represent the refrigerating circuit of a freezer: in that case the operation would be exactly the same as already described, with the only exception that for optimum operation the temperature difference between points U and I of the Mollier diagram should be kept at 4°C during the freezing phases and at 8°C for normal storage phases. A suitable switch coupled to control circuit 10 could be provided for allowing to switch the temperature difference value which is to be maintained by the said circuit 10 in each case.

Freezers of this type are usually provided with a fan 11 for cooling the condenser 2. This fan is usually activated together with the compressor 1 but operating or environmental conditions may demand that the fan be either turned off or operated at its maximum speed. The control circuit 10 is adapted to turn the fan on or off and to regulate its speed according to the temperature difference between the said points U and I and the temperature T of the condenser.

In Figure 3, which shows a diagram of a refrigerator having the condenser immersed in water for producing hot water, the parts already described with reference to Figure 2 have been indicated with the same previously used reference numbers. The refrigerator diagram of Figure 3 includes: a compressor 1, a condenser 2 connected to the outlet of the compressor 1 and immersed in a container 12 full of water, a capillary tube 3 connected to the outlet of the condenser 2 and having dimensions such as that the fluid can flow therethrough at a predetermined maximum flow rate value, a flow control valve 4 which is continuously adjustable, and evaporator 5 connected to the capillary tube 3, a return pipe 6 connecting the outlet of the evaporator 5 to the compressor 1, and two temperature sensors 8, 9 such as negative-temperature-coefficient (NTC) resistors, the first sensor 8 being placed at the inlet of the evaporator 5 and the second 9 being disposed at the outlet of the same evaporator 5. The container 12 has a cold water inlet 13 and an hot water outlet 14.

The said container 12 is used for recovering and storing heat from the condenser 2, which would otherwise be lost; the water thus heated can be used to supply bathroom or kitchen utilities. The way of operation of the appliance of Figure 3 is exactly the same of the appliance according to Figure 2 but for the fact that in this case the external environment surrounding the condenser 2 is represented by the water in the container 12, whose temperature is assumed be normally in the range between 10°C and 15°C and can therefore affect the efficiency of the appliance. For this case, tests have shown that a temperature difference of 6°C between the above defined points U and I would be optimum.

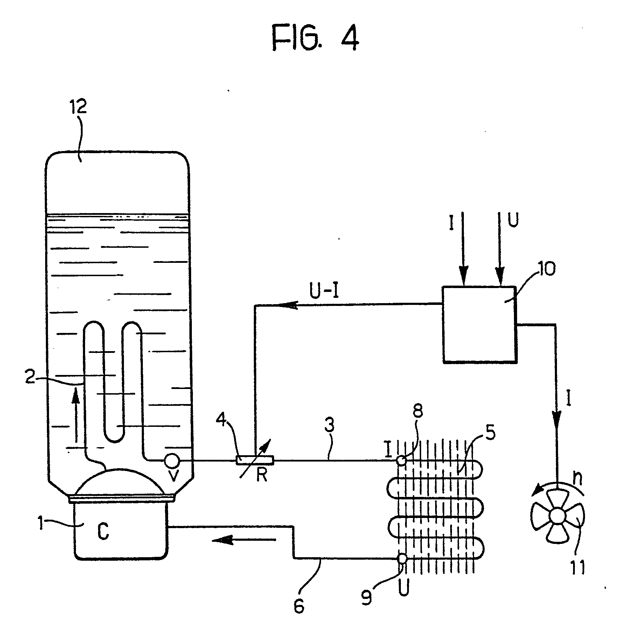

Figure 4 shows a diagram of a heat pump with a condenser immersed in a water container, an evaporator in air, and other parts already shown in Figure 2 and therefore indicated by the previously used numbers. The heat pump includes: a compressor 1, a condenser 3 connected to the outlet of the compressor 1 and immersed in a water container 12, a capillary tube 3 connected to the outlet of the condenser 2 and having dimensions such that the fluid can flow therethrough at a predetermined maximum flow rate value, a flow control valve 4 which is continuously adjustable, an evaporator 5 in air which is connected to the capillary tube 3, a return pipe 6 connecting the outlet of the evaporator 5 to the compressor 1, two temperature sensors 8,9 such as negative-temperature-coefficient (NTC) resistors, one sensor 8 being placed at the inlet of the evaporator 5, the other sensor 9 being disposed at the outlet of the same evaporator 5, an electronic control circuit 10, and a fan 11. The water container 12 is placed on the top of the compressor 1 for recovering the heat thereby generated. As it is known, the function of a heat pump is to collect heat from a low-temperature source (in this case air which is assumed to range in temperature from −15°C to 30°C) and supply it, at the expense of work done by the compressor, to a high-temperature utilization source (in this case the water in container 12, which is assumed to range in temperature from 10° to 50°C).

During operation, the difference in temperature between the said points U and I for the heat pump is set at 8°C, which laboratory tests have shown to be the optimum value. When the said temperature difference starts to fall below the set value (indicating the liquid is still present at the evaporator outlet, and that the flow rate is too high), the control circuit 10 drives the value 4 so as to reduce the flow of the refrigerating fluid.

Conversely, if the said temperature difference starts to rise above the set value (indicating that superheated vapor is present at the evaporator outlet, and that the flow of the fluid is insufficient), the control circuit 10 causes valve 4 to increase the flow of the refrigerating fluid.

A drop of the said temperature difference may be caused either by high temperature of the water in the container 12 and, consequently, also of the condenser 2, or by a low temperature of the air around the evaporator 5, or both.

An increase of the said temperature difference may be caused either by a low temperature of the water in the container 12 and, consequently, also of condenser 2, or by a high temperature of the air around the evaporator 5, or both.

In either cases, the efficiency of the heat pump would tend to become very poor, but the described automatic flow regulating system intervenes keeping it within reasonable limits.

Another way of improving the efficiency of the heat pump when the air temperature around the evaporator is very low is by activating the fan 11 which blows a larger quantity of air towards the evaporator 5 so as to supply it with heat. In this case too, the operation of the fan is controlled by the control circuit in response to changes in the above defined temperature difference.

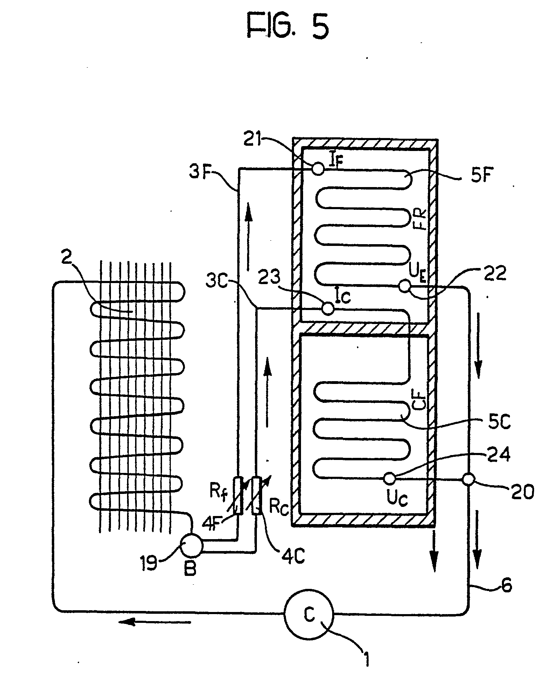

Figure 5 shows a diagram of a combined refrigerator with two compartments (fresh food and freezer compartments), a single compressor and two parallel evaporators, in which the components already described with reference to Figure 2 are indicated with the previously used reference numbers. The diagram of Figure 5 includes: a compressor 1, a condenser 2 connected to the output of the compressor 1, a refrigerating fluid storage tank 19 coupled to the output of the condenser, a first capillary tube 3F which is 0.73 mm in diameter and 2,900 mm long, connected to the storage tank 19, a first flow control valve 4F inserted in the capillary tube 3F and which allows continuous adjustment of the flow in the said tube, a first evaporator 5F connected to the capillary tube 3F, a second capillary tube 3C which is 0.62 mm in diameter and 3,000 mm long, connected to the storage tank 19, a second valve 4C inserted in the capillary tube 3C and which allows continuous adjustment of the flow in that tube (the size of the capillary tubes 3F and 3C is such as to allow a predetermined maximum flow rate of the fluid in both branches of the refrigerating circuit), a second evaporator 5C connected to the capillary tube 3C, a pipe fitting 20 coupled to the outputs of the evaporators 5F and 5C, a return pipe 6 connecting the said pipe fitting 20 the compressor 1, and four temperature sensors 21—24 consisting of negative-temperature-coefficient (NTC) resistors, a first one 21 at the inlet of the evaporator 5F, a second one 22 at the outlet of the same evaporator 5F, a third one 23 at the inlet of the evaporator 5C and the fourth one 24 at the outlet of the same evaporator 5C.

Both compartments of the refrigerator operate in a fully independent way since the evaporators 5F and 5C are connected in parallel so that the refrigerating fluid flowing in one of them cannot flow in the other. Of course, the capacity of the compressor 1 and the condenser 2 must be such that both compartments may be cooled at the same time. A single compartment (e.g. the freezer compartment) may be cooled by closing the valve 4C completely, so that no refrigerating fluid is allowed to flow in evaporator 5C, and by operating the compressor 1. In this way, the freezer compartment would be cooled whereas the fresh food compartment would not. However, with this kind of operation, not all the refrigerating fluid in the circuit would be used, and this is why the storage tank 19 is required, namely for collecting the refrigerating fluid left over in the cycle.

As already mentioned, the operation of the two compartments is independent, therefore the same applies also to the adjustment of the refrigerating fluid flow in the respective circuits, which is peformed in exactly the same way as described with reference to Figure 2. For optimum operation of both compartments, however, the temperature difference between the terminals of the first evaporator 5F must be 4°C, and 6°C between the terminals of the second evaporator 5C (fresh food compartment). Clearly, though not shown in the diagram of Figure 5, a control circuit is provided in this case too: besides receiving signals from the four temperature sensors (21, 22, 23, 24) it must also be designed for supplying control signals to the two values 4F and 4C.

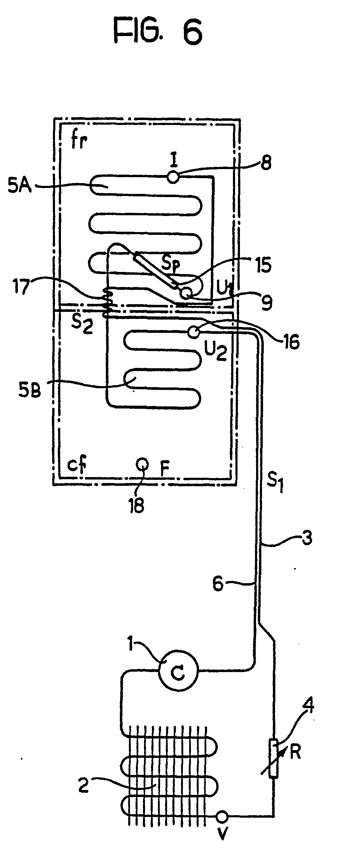

Figure 6 shows a diagram of a two-door refrigerator with two compartments (fresh food and freezer compartments), a single compressor, two series-connected evaporators. In Figure 6 components already shown in Figure 2 have been indicated by the same numbers. The diagram in Figure 6 shows: a compressor 1, a condenser 2 connected to the output of compressor 1, a capillary tube 3 connected to the output of the condenser 2 and having dimensions such that said fluid can flow therethrough at a predetermined maximum flow rate, a valve 4 inserted in the capillary tube 3, which can allow the continuous adjustment of the flow in the said tube, a first evaporator 5A in the freezer compartment connected to the capillary tube 3, a second evaporator 5B in the fresh food compartment, connected to the outlet of the first evaporator 5A via a separator 15 the function of which, during certain operating stages, is to prevent drops of refrigerating fluid from reaching the said second evaporator 5B, a portion 17 of the capillary tube 3 being wound around the inlet of the said second evaporator 5B to the compressor 1, and four temperature sensors consisting of negative-temperature-coefficient (NTC) resistors, the first sensor 8 being placed at the inlet of the first evaporator 5A, the second one 9 at the outlet of the same evaporator 5A, the third one 16 at the outlet of the second evaporator 5B and the fourth one 18 in the fresh food compartment.

Figure 6 could represent a variant of the refrigerating circuit of a combined refrigerator with two compartments (fresh food and freezer compartments), a single compressor and two series-connected evaporators. The only difference, in this case, would be that the freezer compartment would be placed at the bottom and the fresh food compartment at the top. This means that for cooling only the freezer compartment, there would be no need for the separator 15 between the two evaporators to prevent refrigerating fluid entering the fresh food compartment evaporator in that, to do so, the refrigerating fluid would have to rise up more than one meter. It would be therefore very unlikely that drops of refrigerating fluid could reach the fresh food compartment.

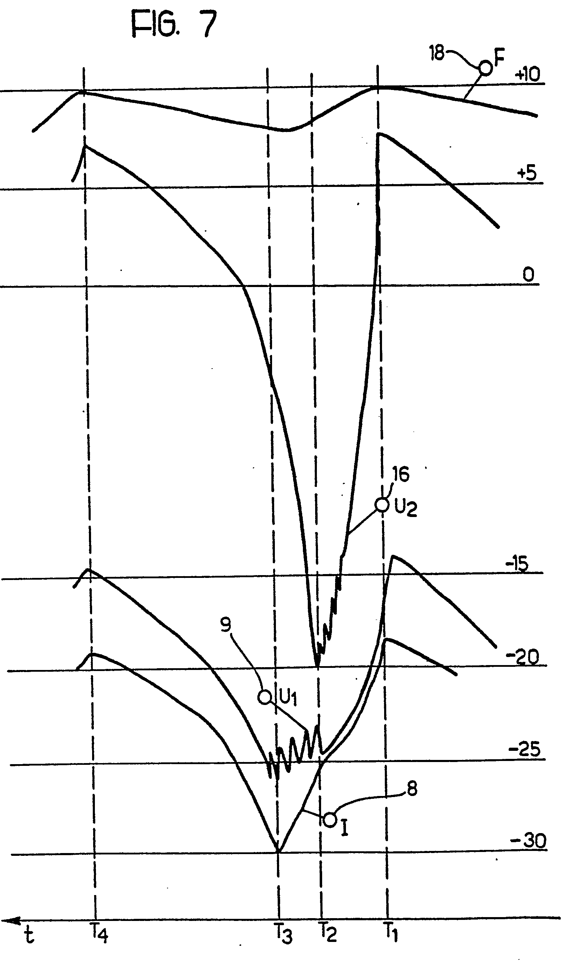

Figure 7, which is useful for a better understanding of how the above appliance works, shows for an operating cycle the temperature at the points where the sensors are located. "F" is the temperature of the fresh food compartment picked up by sensor 18, "I" the temperature at the inlet of the first evaporator 5A picked up by sensor 8, "$U_1$" the temperature at the outlet of the same evaporator 5A, which is roughly the same as the temperature in the freezer compartment, picked up by sensor 9, and "$U_2$" the temperature at the outlet of the second evaporator 5B, which also gives an indication of the final defrosting temperature, picked up by sensor 16.

During operation, the electronic control circuit, not shown in Figure 5, is initially set for a temperature difference "$U_2-I$" of 8°C which, during this stage "controls" the operation of the appliance. When the fresh food compartment temperature "F" and the defrosting temperature "$U_2$" exceed a maximum value, the compressor 1 is started (at time $T_1$).

All the temperatures then begin to fall until temperature "F" in the fresh food compartment gets back to the required level. At this point (at time $T_2$), the control circuit switches over to a temperature difference "$U_1-I$" of 5°C which, during this stage, "controls" the operation of the appliance, while the valve 4 reduces the flow of the refrigerating fluid so that at the inlet of the second evaporator 5B only superheated vapor is present, which has practically no cooling power and cannot lower the temperature of the fresh food compartment further. Separator 15 is useful in achieving this object since it is mounted with a slant which prevents drops of refrigerating fluid from passing from the first evaporator 5A into the second 5B.

The capillary tube portion 17 thermally coupled to the inlet of the second evaporator 5B superheats it by yielding its own heat so as to start the defrosting.

In the meantime, the compressor 1 goes on running and the freezer compartment becomes colder, the latter process being accelerated by the fact that all the cooling power of the refrigerating fluid is spent for the freezer compartment. When temperature "I" in the freezer compartment reaches the required level (at time $T_3$), the compressor 1 is turned off and the temperature in the freezer starts to rise. When temperatures "F" and "$U_2$" exceed respective maximum values, another cycle is started.

Should the temperature "I" in the freezer be the first to reach its maximum value so as to require that the compressor 1 be turned on, an electric defrosting resistor, not shown in the diagram, is supplied so as to heat the evaporator plate 5B and bring temperature "$U_2$" quickly up to its maximum value so that the compressor 1 may be turned on. If, on the other hand, the fresh food compartment needs to be cooled, the compressor can be turned on immediately without waiting that also the freeze compartment needs to be cooled since overcooling the freezer is not an inconvenience. For fast-freezing (i.e. when fresh food has just been placed inside the freezer compartment) without lowering the temperature of the fresh food compartment, the appliance operates according to stage $T_2-T_3$ of the cycle as long as necessary with no damage to the food in the fresh food compartment, with no damage to the food in the fresh food compartment, which remains unaffected. Furthermore, the freezing efficiency is increased during this stage since all the cooling power of the refrigerating fluid is concentrated onto the freezer compartment. As the foregoing description clearly shows, defrosting is performed automatically in each cycle. In fact, with this control system, the formation of frost on the return pipe 6 is impossible since during stage $T_2-T_3$, said pipe contains only superheated vapor and, during stage $T_1-T_2$, if the temperature difference "$U_2-I$" tends to drop (flow rate too high), the control circuit causes the valve 4 to reduce the flow of the refrigerating fluid.

Similarly, if the temperature difference "$U_1-I$" should rise during the stage $T_1-T_2$, or "$U_1-I$" during the stage $T_2-T_3$ (indicating poor flow), the control circuit would cause the valve 4 to increase the flow of refrigerating fluid.

In both stages $T_1-T_2$ and $T_2-T_3$, the refrigerating fluid flow is regulated so as to be automatically "adapted" to the different load and external temperature conditions thus ensuring a good standard of efficiency at all times.

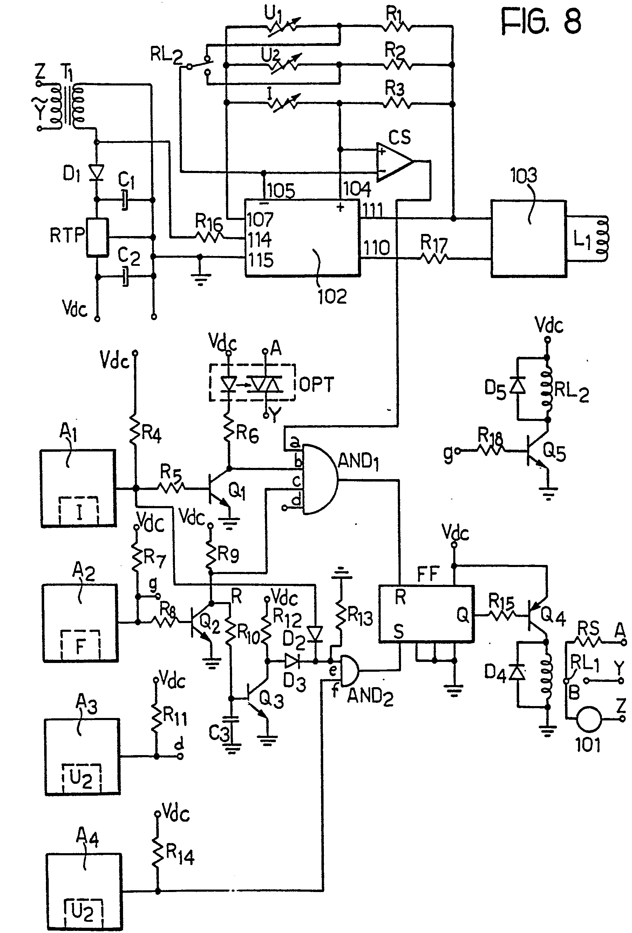

Finally, Figure 8 shows a diagram, partly in block form, or an electronic control circuit used for regulating the refrigerating fluid flow in the appliance of Figure 6. In Figure 8 there is shown: a transformer $T_1$ with its primary winding connected to the mains, one end of the secondary winding grounded and the other end connected to both the anode of a diode $D_1$ and one end of a resistor $R_{16}$. The cathode of diode $D_1$ is connected to the positive terminal of a capacitor $C_1$, the negative terminal of which is grounded and connected to the input of a positive voltage regular RTP. A central terminal of the latter is grounded, while its ouput terminal is connected to the positive terminal of capacitor $C_2$, whose negative terminal is also grounded. A d.c. supply voltage is available across $C_2$.

Block 102 represents a Motorola UAA 1006 integrated circuit and its driver circuit: the reference numbers used correspond to those of the UAA 1006 pins plus one hundred. The function of the block 102 is to supply between its output pins 110 and 111 a d.c. voltage proportional to the voltage difference between its input pins 104 and 105. The other end of resistor $R_{16}$ is connected to pin 114 of block 102, whose pin 115 is grounded. Pin 107 is connected to 3 NTC resistors $U_1$, $U_2$ and I. $U_1$ is connected to one end of resistor $R_1$ and one contact of a relay $RL_2$; the other end of resistor $R_1$, like one end of resistors $R_2$ and $R_3$ is connected to pin 111 of block 102. The other end of NTC resistor $U_2$ is connected to the end of resistor $R_2$ that is not connected to pin 111, and to another contact of relay $RL_2$. An end of NTC resistor I is connected to the end of resistor $R_3$ that is not connected to pin 111 of block 102, as well as to pin 104 of the said block 102 and the noninverting input of a threshold comparator CS. The movable contact of relay $RL_2$ is connected to pin 105 of block 102 and the inverting input of threshold comparator CS whose output is connected to an input A of a gate $AND_1$. Pin 110 of block 102 is connected to one end of a resistor $R_{17}$ whose other end is connected to one input of a block 103 having another input connected to pin 111 of block 102. The function of block 103 is to adapt the d.c. voltage from block 102 for driving the coil $L_1$ of a refrigerating fluid flow regulating device of the type described in Italian utility model application No. 53045-B/81 filed by the applicant on March 24, 1981. The said device is inserted in the capillary tube of the refrigerating circuit and comprises a cylindrical container, around which the said coil $L_1$ is wound and in which an iron core with a tip can partially close a frusto-conical passage as a function of the driving current in said coil; the appliance operates with a maximum fluid flow rate when no current is flowing in said coil $L_1$.

Four blocks indicated with $A_1$, $A_2$, $A_3$ and $A_4$ represent four level comparators with hysteresis provided with respective threshold setting and driving circuits of the same type described in Italian patent application No. 67141—A/79, in the name of the applicant. Block $A_1$ "senses" the temperature of the freezer compartment (fr in Figure 6) at its input, via a NTC resistor I (whose connection to block $A_1$ is not shown in the diagram). The threshold of block $A_1$ is set to the maximum temperature the freezer compartment must not exceed and which, in this case, may range from $-16°C$ to $-21.5°C$ or from $-22°C$ to $-28°C$ depending on whether the appliance is set to the minimum or the maximum. The output of $A_1$ is connected to one end of resistor $R_4$ (whose other end is connected to the d.c. voltage supply), to one end of resistor $R_5$ (whose other end is connected to the base of a NPN transistor $Q_1$) and to the anode of diode $D_1$, whose cathode is connected to an input e of a gate $AND_2$. The emitter of transistor $Q_1$ is grounded whereas its collector is connected to both an input b of $AND_1$ and one end of resistor $R_6$, whose other end is connected to the cathode of the diode of an optotriac OPT. The anode of the said diode is connected to the d.c. voltage supply whereas the two output terminals of the optotriac OPT are connected to a mains terminal Y and terminal A of defrosting resistor RS, respectively.

Block $A_2$ "senses" the air temperature in the fresh food compartment (cf in Figure 6) via a NTC resistor F which is not shown in the diagram but forms part of block $A_2$. The threshold of the latter is set to the maximum temperature which the fresh food compartment must not exceed and which, in this case, may range from 15°C to 0°C depending on whether the appliance is set to the minimum or maximum. The output of $A_2$ is connected to one end of a resistor $R_7$ (whose

other end is connected to the d.c. voltage supply), to one end of resistor $R_{18}$ (whose other end is connected to the base of a NPN transistor $Q_5$) and to one end of resistor $R_8$, whose other end is connected to the base of a NPN transistor $Q_2$. The emitter of transistor $Q_5$ is grounded whereas its collector is connected to both one end of a coil of relay $RL_2$ and the anode of a diode $D_5$ whose cathode is connected to the d.c. voltage supply. The other end of the said coil is also connected to the d.c. voltage supply. The emitter of transistor $Q_2$ is grounded whereas its collector is connected to one end of a resistor $R_9$, whose other end is connected to the d.c. voltage supply, as well as to input c of gate $AND_1$.

$R_9$ is also connected to one end of a resistor $R_{10}$, whose other end is connected to the base of a NPN transistor $Q_3$ and one end of capacitor $C_3$, the other end of which is grounded.

The emitter of transistor $Q_3$ is grounded whereas its collector is connected to one end of resistor $R_{12}$, whose other end is connected to both the d.c. voltage supply and the anode of a diode $D_3$ having the cathode connected to input e of gate $AND_2$. The latter is also connected to one end of a resistor $R_{13}$, whose other end is grounded.

Block $A_3$ "senses" the temperature of the fresh food compartment plate (cf in Figure 6) via a NTC resistor $U_2$ not shown in the diagram. The threshold of block $A_3$ is set to the minimum temperature which the fresh food compartment must not fall below and which, in this case, is $-7°$. The output of $A_3$ is connected to one end of a resistor $R_{11}$, whose other end is connected to the d.c. voltage supply and input d of gate $AND_1$.

Block $A_4$ also "senses" the temperature of the fresh food compartment plate (cf in Figure 6) via a NTC resistor $U_2$, not shown in the diagram, but, in this case, its threshold is set to the maximum temperature the fresh food compartment must not exceed (here 5°C).

The output of $A_4$ is connected to one end of a resistor $R_{14}$, whose other end is connected to the d.c. voltage supply and to an input f of gate $AND_2$.

A set-reset flip-flop FF has the set input connected to the output of gate $AND_2$ and the reset input coupled to the output of gate $AND_1$, whereas the output Q is connected to one end of a resistor $R_{15}$, whose other end is connected the base of a PNP transistor $Q_4$.

The emitter of transistor $Q_4$ is connected to the d.c. voltage supply whereas its collector is connected to one end of the coil of relay RL, whose other end is grounded and connected to the cathode of a diode $D_4$, whose anode is also grounded. The (normally-closed contacts of relay $RL_1$ are connected one to the mains terminal Y and the other to terminal B of the defrosting resistor RS and one terminal of compressor 101, whose other terminal is connected to mains terminal Z.

The above described circuit operates as follows: when a signal of "high" level is present at the output of block $A_1$ or $A_2$ (i.e. the freezer or fresh food compartment needs to be cooled) and at the same time a "high" level signal is present at the output of block $A_4$ (defrosting is over), the output of gate $AND_2$ switches to "high" level and flip-flop FF is set. The output of flip-flop FF also switches to "high" level, transistor $Q_4$ stops conducting, relay $RL_1$ is de-energized, its contacts close and compressor 101 starts running.

If the output of block $A_1$ is "high" (the freezer compartment needs to be cooled) while that of block $A_4$ is "low" (defrosting not completed), the compressor 101 does not start. In this case the defrosting resistor RS is supplied via the optotriac OPT so as to heat the fresh food compartment plate to complete the defrosting quickly; thereafter the cycle-start enabling signal comes from block $A_4$. Via transistor $Q_5$, the "high" signal at the output of block $A_2$ energizes relay $RL_2$ which closes its contact so that between the input terminals 104 and 105 of block 102 the voltage difference between the circuit branches of $U_2$ and I is applied (the resistance values of resistors $R_2$ and $R_3$ are selected so that the said voltage difference is nil when the temperature difference "$U_2-I$" is 8°C). The operation continues in this way until the signal at the output of block $A_2$ switches back to "low" level.

At this point, relay $RL_2$ is de-energized and opens its contracts so that between input terminals 104 and 105 of block 162 there is applied the voltage difference between the circuit branches of $U_1$ and I (the resistance of $R_1$ is selected so that this voltage difference is nil when the temperature difference ($U_1-I$" is 5°C). At the same time, a voltage is output between terminals 110 and 111 of block 102: this voltage adapted by block 103, causes the flow through coil $L_1$ of a current such that the refrigerating fluid flow regulator valve allows the flow of a quantity of refrigerating fluid which cannot cool the fresh food compartment further.

When the outputs of blocks $A_1$, $A_2$, $A_3$ and threshold comparator CS are all "low" (the fresh food and freezer compartments are cold enough. The fresh food compartment plate is over −7°C and the temperature difference "$U_1-I$" is 5°C), the output of gate $AND_1$ switches to "high" level and flip-flop FF is reset. Output Q of flip-flop FF switches to "low" level, the transistor $Q_4$ starts conducting, relay $RL_1$ is energized and opens its contact stopping compressor 101 and bringing the cycle to an end.

During both types of cycle, if the difference in voltage at the terminals of block 102 (i.e. temperature difference $U_2-I$ or $U_1-I$) tends to grow over the set values (poor fluid flow), the output voltage of block 102 decreases in proportion to the increase of its input voltage. Via block 103, the decrease of the output voltage causes the reduction of the current in coil $L_1$ and this causes in turn the flow regulator valve to increase the flow of the refrigerating fluid in circulation by the amount needed.

If, on the other hand, the said voltage tends to fall below the set value (excessive flow rate), the output voltage of block 102 increases in proportion to the input voltage drop. Via block 103, that voltage increase causes an increase of the current coil $L_1$ so that the flow regulator valve reduces the refrigerating fluid flow in circulation by the amount needed to restore balance conditions.

The advantages of the present invention are apparent from the foregoing description. In partiuclar the invention allows a more accurate adjustment of the refrigerating fluid flow as a function of load and external temperature, thanks to the use of two temperature sensors, and the independent temperature adjustment in the two compartments of two-door or combined refrigerators regardless of whether their evaporators are series- or parallel-connected. The formation of frost on the refrigerating fluid return pipe to the compressor is prevented and, finally, a considerable amount of energy can be saved. Laboratory tests on a two-door refrigerator have shown that a refrigerator without the control system according to the invention and operating with a freezer temperature of −17°C and a fresh food compartment temperature of 8°C consumes 1830 Wh whereas a refrigerator with the system according to the present invention and operating under the same conditions consumes 1280 Wh, with an energy saving of 550 Wh, i.e. 30%. Furthermore, for operating the first refrigerator with a freezer compartment temperature of −19°C, the temperature in the fresh food compartment would be lower than 2°C, which means a consumption of 2160 Wh; in the second refrigerator, provided with the control system according to the invention, at the same freezer temperature and operating conditions the fresh food compartment temperature would be about 9.2°C with a consumption of 1400 Wh, thus saving 760 Wh, i.e. 35%.

**Claims**

1. System for controlling the flow of refrigerating fluid in a cooling or heating appliance in which the refrigerating fluid is circulated through a compressor (1), a condenser (2), an expansion means (3, 3C, 3F, 3), an evaporator (5, 5C, 5F, 5A, 5B) and a return pipe (6); the system comprising:

temperature sensor means (8, 9) for providing signals indicative of the temperature at the inlet (I) and at the outlet (U) of said evaporator (5; 5C, 5F; 5A, 5B)

flow control means (3; 3C, 3F; 3; 4; 4C, 4F; 4), including a continuously adjustable flow control valve (4; 4C, 4F; 4) between the condenser (2) and the evaporator (5, 5C, 5F; 5A, 5B), adapted to regulate the flow rate of said fluid between a maximum value and a minimum value, and

a control device (10) for driving the said control valve (4; 4C, 4F; 4) as a function of the signals from said sensor means (8, 9) so as to keep the temperature difference (U-I) between the outlet (U) and the inlet (I) of the evaporator (5; 5C, 5F, 5A, 5B) substantially constant,

characterized in that the said flow control means (3; 3C, 3F; 3; 4; 4C, 4F; 4) consist in a capillary tube (3; 3C, 3F; 3), comprised in said expansion means (3; 3C, 3F; 3), connected in series with the said flow control valve (4; 4C, 4F; 4), and having dimensions such that said fluid can flow therethrough at said maximum flow rate value with a substantial pressure reduction across the said valve (4; 4C, 4F; 4), whereby the said flow control valve (4; 4C, 4F; 4) is a throttle valve (4; 4C, 4F; 4) capable of regulating the flow rate of said fluid between the said maximum and minimum values at the reduced pressure of the fluid.

2. A system according to Claim 1, wherein said control device includes an electronic control circuit (10) adapted to drive the said control valve (4; 4C, 4F; 4) as a function of the signals from said temperature sensor means (8, 9) so as to reduce the pressure variations occurring across the compressor (1) as a result of changes in the load of the appliance or the external temperature.

3. A system according to Claim 1 or 2, wherein said flow control valve (4; 4C, 4F; 4) includes a cylindrical container, around which a coil ($L_1$) is wound, and within which an iron core is mounted, the said core having a tip which can partially close a frusto-conical passage as a function of the current flowing in the said coil ($L_1$); the valve (4; 4C, 4F; 4) allowing a predetermined maximum flow of fluid when no current is supplied to the said coil ($L_1$).

4. A system according to one of the preceding Claims, for a freezer having a single compartment for frozen food, characterized in that it includes further temperature sensor means (7) for sensing the temperature of the condenser (2).

5. A system according to Claims 2 and 4, wherein the electronic control circuit (10) is adapted also to control the operation of a cooling fan (11) coupled to the condenser (2).

6. A system according to Claims 2 and 4, wherein the said electronic control circuit (10) is adapted to drive the said flow control valve (4; 4C, 4F; 4) so as to maintain the temperature difference across the evaporator (5) at about 6°C.

7. A system according to Claim 5, wherein a cooling fan (11) is coupled to the condenser (2), and the electronic control circuit (10) is adapted to drive the said flow control valve (4; 4C, 4F; 4) so as to maintain the temperature difference across the evaporator (5) at about 4°C during the freezing phases in which food is to be frozen, and at about 8°C during normal storage phases; the said electronic control circuit (10) being further adapted to control the operation of said fan (11) as a function of the temperature detected by said further temperature sensor means (7) and the temperature difference across the evaporator (5).

8. A system according to Claim 1, for a cooling appliance with a condenser immersed in a container (12) full of water which can be used for bathroom or kitchen utilities, wherein the said electronic control circuit (10) is adapted to drive the said flow control valve (4; 4C, 4F; 4) also as a function of the temperature of the water in said container (12), so as to maintain the temperature difference across the evaporator (5) at about 6°C.

9. A system according to Claim 1, for a heat pump including a condenser (2) immersed in a container (12) full of water which can be used in bathroom or kitchen utilities, and an evaporator (5) in air, wherein a fan (11) is coupled to the evaporator (5) and the said electronic control circuit (10) is adapted to drive said flow control valve (4; 4C, 4F; 4) also as a function of the temperature of the water in said container (12), so as to maintain the temperature difference across the evaporator (5) at about 8°C, said electronic control circuit (10) being further adapted to control the operation of the said fan (11) in a predetermined way as a function of the temperature of the air around the evaporator (5).

10. A system according to Claim 1, for a cooling appliance with two cooled compartments which includes a single compressor (1), a single condenser (2) and two parallel-connected evaporators (5C; 5F) and two continuously adjustable flow control valves (4C, 4F) connected each in series with a capillary tube (3C; 3F) and one of the evaporators (5C; 5F).

11. A system according to Claim 10, wherein said temperature sensor means include temperature sensors (21—24) at the inlet and the outlet of each of said evaporators (5C; 5F).

12. A system according to Claim 10, further including a storage tank (19) for the refrigerating fluid at the outlet of the condenser (2), the said electronic control circuit (10) being adapted to drive the said flow control valves (4C; 4F) so as to maintain the temperature difference across the said evaporators (5C; 5F) at respective preset values, preferably about 4°C and 6°C, respectively.

13. A system according to Claim 1, for a cooling appliance with two cooler compartments (fr; cf) which includes a single compressor (1) and a first and a second evaporator (5A; 5B) connected in series, wherein said temperature sensor means include temperature sensors (8, 9, 16, 18) at the inlet and the outlet of the first evaporator (5A), as well as at the outlet of the second evaporator (5B) and in the compartment (cf) to which the second evaporator (5B) is associated.

14. A system according to Claim 13, wherein between the outlet of the first evaporator (5A) and the inlet of the second evaporator (5B) a separator device (15) is provided, which is adapted to prevent drops of refrigerating fluid from entering the second evaporator (5B) during predetermined operating stages.

15. A system according to Claim 14, wherein a portion (17) of the said capillary tube (3) is wound around the said second evaporator (5B), whereby in predetermined operating phases heat can be transferred from said capillary tube (3) to the said second evaporator (5B).

16. A system according to Claim 15, wherein said electronic control circuit (10) is adapted to drive said flow control valve (4) so as to maintain the temperature difference across the first and the second evaporator (5A, 5B) at about 5°C and 8°C, respectively.

17. A system according to Claims 3 and 16, wherein said electronic control circuit (10) comprises an integrated circuit (102) adapted for controlling the current supplied to the coil ($L_1$) of said flow control valve (4).

18. A system according to Claim 16 or 17, wherein said electronic control circuit (10) (Fig. 8) comprises first circuit means ($A_4$, $AND_2$, $Q_4$) adapted for preventing the compressor (101) from being started before the said second evaporator (5B) is completely defrosted.

19. A system according to one of Claims 16 to 18, wherein the said electronic control circuit (10) includes (Fig. 8) a defrosting resistor (RS) coupled to the said second evaporator (5B); the said electronic control circuit (10) being adapted to activate said defrosting resistor (RS) so as to heat said second evaporator (5B) in predetermined conditions to accelerate the defrosting thereof.

20. A system according to Claim 18 or 19, wherein said electronic control circuit (10) comprises second circuit means ($A_1$, $A_2$, $A_3$; CS, $AND_1$; FF; $Q_4$) adapted to control the deactivation of the said compressor (101) in dependence on the temperature difference across the said evaporators (5A, 5B).

21. A system according to Claim 17, wherein said electronic control circuit (10) includes switch means ($RL_2$) coupled to said temperature sensors means ($U_1$, $U_2$) and adapted to provide switchable reference threshold voltage signals to said integrated circuit (102) whereby the said integrated circuit (102) causes the flow in said coil ($L_1$) of a current, the intensity of which depends upon said threshold voltage signals.

22. A system according to any of the preceding Claims, wherein said temperature sensor means include two or more negative-temperature-coefficient (NTC) resistors.

**Patentansprüche**

1. System zum Steuern der Strömung von Kühlfluid in einem Kühl- oder Heizgerät, bei dem das Kühlfluid durch einen Kompressor (1), einen Kondensator (2), eine Expansionseinrichtung (3; 3C, 3F, 3), einen Verdampfer (5; 5C, 5F; 5A, 5B) und ein Rückführrohr (6) zirkuliert, wobei das System aufweist:

eine Temperatursensoreinrichtung (8, 9) zur Schaffung von Signalen, die die Temperatur an Eingang (I) und am Ausgang (U) des Verdampfers (5; 5C, 5F; 5A, 5B) wiedergeben,

eine Strömungssteuereinrichtung (3; 3C, 3F; 3; 4; 4C, 4F; 4) mit einem stufenlos einstellbaren Strömungssteuerventil (4; 4C, 4F; 4) zwischen dem Kondensator (2) und dem Verdampfer (5; 5C, 5F; 5A, 5B), das zum Regeln der Strömungsrate des Fluids zwischen einem Maximalwert und einem Minimalwert ausgelegt ist, und

eine Steuervorrichtung (10) zum derartigen Ansteuern des genannten Steuerventils (4; 4C, 4F; 4) in Abhängigkeit von den Signalen der Sensoreinrichtung (8, 9), daß sich die Temperaturdifferenz (U−I) zwischen dem Ausgang (U) und dem Eingang (I) das Verdampfers (5; 5C, 5F; 5A, 5B) im wesentlichen konstant halten läßt,

dadurch gekennzeichnet, daß die genannte Strömungssteuereinrichtung (3; 3C, 3F; 3; 4; 4C, 4F, 4) aus einem Kapillarrohr (3; 3C, 3F; 3) gebildet ist, das in der Expansionseinrichtung (3; 3C; 3F; 3) enthalten ist, mit dem genannten Strömungssteuerventil (4; 4C; 4F; 4) in Reih geschaltet ist und derartige Abmessungen aufweist, daß es von dem Fluid mit dem genannten maximalen Strömungsratenwert durchströmbar ist und dabei eine beträchtliche Druckreduzierung über dem genannten Ventil (4; 4C, 4F; 4) erfolgt, wobei es sich bei dem genannten Strömunssteuerventil (4; 4C, 4F; 4) um ein Drosselventil (4; 4C, 4F; 4) handelt, das in der Lage ist, die Strömungsrate des Fluids zwischen dem genannten Maximalwert und dem genannten Minimalwert bei dem reduzierten Druck des Fluids zu regeln.

2. System nach Anspruch 1, bei dem die Steuervorrichtung eine elektronische Steuerschaltung (10) beinhaltet, die zum derartigen Ansteuern des genannten Steuerventils (4; 4C, 4F; 4) in Abhängigkeit von den Signalen von der Temperatursensoreinrichtung (8, 9) ausgelegt ist, daß sich die als Ergebnis von Änderungen in der Belastung des Geräts oder der Außentemperatur über dem Kompressor (1) auftretenden Druckschwankungen reduzieren lassen.

3. System nach Anspruch 1 oder 2, bei dem das Strömungssteuerventil (4; 4C, 4F; 4) einen zylindrischen Behälter beinhaltet, um den eine Wicklung ($L_1$) gewickelt ist und in dem ein Eisenkern angebracht ist; wobei der genannte Kern einen Endbereich aufweist, der zum teilweisen Schließen einer kegelstumpfförmigen Passage in Abhängigkeit von dem die genannte Wicklung ($L_1$) durchfließenden Strom ausgelegt ist; wobei das Ventil (4; 4C, 4F; 4) eine vorbestimmte Maximalströmung des Fluids gestattet, wenn der genannten Wicklung ($L_1$) kein Strom zugeführt wird.

4. System nach einem der vorausgehenden Ansprüche für ein Gefriergerät mit einem einzelnen Fach für gefrorene Nahrungsmittel, dadurch gekennzeichnet, daß es eine weitere Temperatursensoreinrichtung (7) zum Erfassen der Temperatur des Kondensators (2) beinhaltet.

5. System nach Anspruch 2 und 4, bei dem die elektronische Steuerschaltung (10) auch zum Steuern des Betriebs eines mit dem Konensator (2) gekoppelten Kühlventilators (11) ausgelegt ist.

6. System nach Anspruch 2 und 4, bei dem die genannte elektronische Steuerschaltung (10) zum derartigen Ansteuern des genannten Strömungssteuerventils (4; 4C, 4F; 4) ausgelegt ist, daß sich die Temperaturdifferenz über dem Verdampfer (5) auf ca. 6°C halten läßt.

7. System nach Anspruch 5, bei dem ein Kühlventilator (11) mit dem Kondensator (2) gekoppelt ist und die elektronische Steuerschaltung (10) zum derartigen Ansteuern des genannten Strömungssteuerventils (4; 4C, 4F; 4) ausgelegt ist, daß sich die Temperaturdifferenz über dem Verdampfer (5) während der Einfrierphasen, in denen Nahrungsmittel gefroren werden sollen, auf ca. 4°C und während der normalen Aufbewahrungsphasen auf ca. 8°C halten läßt; wobei die genannte elektronische Steuerschaltung (10) außerdem dazu Ausgelegt ist, den Betrieb des genannten Ventilators (11) in Abhängigkeit von der durch die genannte weitere Temperatursensoreinrichtung (7) erfaßten Temperatur und der Temperaturdifferenz über dem Verdampfer (5) zu steuern.

8. System nach Anspruch 1 für ein Kühlgerät mit einem Kondensator, der in einen mit Wasser gefühlten Behälter (12) eingetaucht ist, das sich für Badezimmer- oder Küchenversorgungseinrichtungen verwenden läßt, bei dem die genannte elektronische Steuerschaltung (10) dazu ausgelegt ist, das genannte Strömungssteuerventil (4; 4C, 4F; 4) auch in Abhängigkeit von der Temperatur des Wassers in dem Bahälter (12) derart anzusteuern, daß sich die Temperaturdifferenz über dem Verdampfer (5) auf ca. 6°C halten läßt.

9. System nach Anspruch 1 für eine Wärmepumpe mit einem Kondensator (2), der in einen mit Wasser gefühlten Behälter (12) eingetaucht ist, das sich für Badezimmer- oder Küchenversorgungseinrichtungen verwenden läßt, und mit einem von Luft umgebenen Verdampfer (5), wobei ein Ventilator (11) mit dem Verdampfer (5) gekoppelt ist und die genannte elektronische Steuerschaltung (10) dazu ausgelegt ist, daß genannte Strömungssteuerventil (4; 4C, 4F; 4) auch in Abhängigkeit von der Temperatur des Wassers in dem Behälter (12) derart anzusteuern, daß sich die Temperaturdifferenz über dem Verdampfer (5) auf ca. 8°C halten läßt, wobei die genannte elektronische Steuerschaltung (10) außerdem zum Steuern des Betriebs des genannten Ventilators (11) in einer vorbestimmten Weise in Abhängigkeit von der Temperatur der den Verdampfer (5) umgebenden Luft ausgelegt ist.

10. System nach Anspruch 1, für ein Kühlgerät mit zwei gekühlten Fächern, das einen einzigen Kompressor (1) einen einzigen Kondensator (2) und zwei zueinander parallel geschaltete Verdampfer (5C; 5F) sowie zwei stufenlos verstellbare Strömungssteuerventils (4C, 4F) beinhaltet, die jeweils mit einen Kapillarrohr (3C; 3F) und einem der Verdampfer (5C; 5F) in Reihe geschaltet sind.

11. System nach Anspruch 10, bei dem die Temperatursensoreinrichtung Temperatursensoren (21 bis 24) an dem Eingang und dem Ausgang jedes Verdampfers (5C; 5F) beinhaltet.

12. System nach Anspruch 10, bei dem außerdem ein Vorratstank (19) für das Kühlfluid an dem Ausgang des Kondensators (2) vorhanden ist, wobei die genannte elektronische Steuerschaltung (10) zum derartigen Ansteuern der genannten Strömungssteuerventile (4C; 4F) ausgelegt ist, daß sich die Temperaturdifferenz über den genannten Verdampfern (5C; 5F) auf jeweiligen voreingestellten Werten von vorzugsweise ca. 4°C bzw. 6°C halten läßt.

13. System nach Anspruch 1, für ein Kühlgerät mit zwei Kühlfächern (fr, cf), das einen einzigen Kompressor (1) sowie einen ersten und einen zweiten Verdampfer (5A; 5B) beinhaltet, die zueinander in Reihe geschaltet sind, wobei die genannte Temperatursensoreinrichtung Temperatursensoren (8, 9, 16, 18) am Eingang und am Ausgang des ersten Verdampfers (5A) sowie am Ausgang des zweiten Verdampfers (5B) und in demjenigen Fach (cf) aufweist, dem der zweite Verdampfer (5B) zugeordnet ist.

14. System nach Anspruch 13, bei dem zwischen dem Ausgang des ersten Verdampfers (5A) und dem Eingang des zweiten Verdampfers (5B) eine Abscheidervorrichtung (15) vorgesehen ist, die dazu ausgelegt ist, Tropfen von Kühlfluid an einem Eindringen in den zweiten Verdampfer (5B) während vorbestimmter Betriebsstadien zu hindern.

15. System nach Anspruch 14, bei dem ein Bereich (17) des genannten Kapillarrohrs (3) um den genannten zweiten Verdampfer (5B) gewunden ist, wodurch in vorbestimmten Betriebsphasen Wärme von dem genannten Kapillarrohr (3) zu dem genannten zweiten Verdampfer (5B) übertragen werden kann.

16. System nach Anspruch 15, bei dem die genannte elektronische Steuerschaltung (10) zum derartigen Ansteuern des genannten Strömungssteuerventils (4) ausgelegt ist, daß sich die Temperaturdifferenz über dem ersten und dem zweiten Verdampfer (5A, 5B) auf ca. 5°C bzw. 8°C halten läßt.

17. System nach Anspruch 3 und 16, bei dem die genannte elektronische Steuerschaltung (10) eine intergrierte Schaltung (102) beinhaltet, die zum Steuern des der Wicklung ($L_1$) des genannten Strömungssteuerventils (4) zugeführten Stroms ausgelegt ist.

18. System nach Anspruch 16 oder 17, bei dem die genannte elektronische Steuerschaltung (10) (Fig. 8) eine erste Schaltungseinrichtung ($A_4$, $AND_2$, $Q_4$) umfaßt, die dazu ausgelegt ist, ein Starten des Kompressors (101) vor der vollständigen Enteisung des genannten zweiten Verdampfers (5B) zu verhindern.

19. System nach einem der Ansprüche 16 bis 18, bei dem die genannte elektronische Steuerschaltung (10) (Fig. 8) einen mit dem genannten zweiten Verdampfer (5B) gekoppelten Enteisungs-Widerstand (RS) beinhaltet; wobei die genannte elektronische Steuerschaltung (10) zum derartigen Betätigen des Enteisungs-Widerstands (RS) ausgelegt ist, daß sich der genannte zweite Verdampfer (5B) unter vorbestimmten Bedingungen zur Beschleunigung seiner Enteisung erwärmen läßt.

20. System nach Anspruch 18 oder 19, bei dem die genannte elektronische Steuerschaltung (10) eine zweite Schaltungseinrichtung ($A_1$, $A_2$, $A_3$; CS; $AND_1$; FF; $Q_4$) umfaßt, die dazu ausgelegt ist, das Ausschalten des genannten Kompressors (101) in Abhängigkeit von der Temperaturdifferenz über den genannten Verdampfern (5A, 5B) zu steuern.

21. System nach Anspruch 17, bei dem die genannte elektronische Steuerschaltung (10) eine Schaltereinrichtung ($RL_2$) beinhaltet, die mit der

genannten Temperatursensoreinrichtung ($U_1$, $U_2$) gekoppelt ist und dazu ausgelegt ist, schaltbare Bezugsschwellenspannungssignale an die integrierte Schaltung (102) zu liefern, wodurch die genannte integrierte Schaltung (102) den Fluß eines elektrischen Stroms in der genannten Wicklung ($L_1$) hervorruft, dessen Intensität von den genannten Schwellenspannungssignalen abhängt.

22. System nach einem der vorausgehenden Ansprüche, bei dem die Temperatursensoreinrichtung zwei oder mehr Widerstände mit negativen Temperatur-Koeffizienten (NTC-Widerstände) beinhaltet.

**Revendications**

1. Un système pour commander le débit du fluide réfrigérant dans un appareil de refroidissement ou de chauffage dans lequel le fluide réfrigérant circule à travers un compresseur (1), un condenseur (2), un moyen d'expansion (3; 3C, 3F; 3), un évaporateur (5; 5C, 5F; 5A, 5B) et une conduite de retour (6); le système comprenant:

des moyens capteurs de température (8, 9) destinés à fournir des signaux indicatifs de la température à l'entrée (I) et la sortie (U) de cet évaporateur (5; 5C, 5F; 5A, 5B),

un moyen de commande du débit (3; 3C, 3F; 3; 4; 4C, 4F; 4), comprenant une soupape de commande du débit réglable continûment (4; 4C, 4F; 4) entre le condenseur (2) et l'évaporateur (5; 5C, 5F; 5A, 5B), conçue de façon à réguler le débit dudit fluide entre une valeur maximum et une valeur minimum, et

un dispositif de commande (10) destiné à entraîner cette soupape de commande (4; 4C, 4F; 4) en fonction des signaux issus des moyens capteurs (8, 9) de façon à maintenir la différence de température (U−I) entre la sortie (U) et l'entrée (I) de l'évaporateur (5; 5C, 5F; 5A, 5B) sensiblement constante, caractérisé en ce que ledit moyen de commande ou débit (3; 3C, 3F; 3; 4; 4C, 4F; 4) consiste en un tube capillaire (3; 3C, 3F; 3), compris dans ledit moyen d'expansion (3; 3C, 3F; 3), couplé en série avec la soupape de commande de débit (4; 4C, 4F; 4), et ayant des dimensions telles que le fluide puisse s'y écouler à la valeur maximum de débit avec une réduction substantielle de pression à travers cette soupape (4; 4C, 4F, 4), cette soupape de commande de débit (4; 4C; 4F; 4) étant une soupape d'étranglement (4; 4C, 4F; 4) capable de réguler le débit dudit fluide entre les valeurs maximum et minimum à la pression réduite du fluide.

2. Un système selon la revendication 1, dans lequel le dispositif de commande comprend un circuit électronique de commande (10) conçu de façon à entraîner la soupape de commande (4; 4C, 4F; 4) en fonction des signaux issue des moyens capteurs de température (8, 9) de façon à réduire les variations de pression se produisant à travers le compresseur (1) à la suite de changements de la charge de l'appareil ou de la température externe.

3. Un système selon la revendication 1 ou 2, dans lequel la soupape de commande de débit (4; 4C; 4F; 4) comprend un conteneur cylindrique, autour duquel une bobine ($L_1$) est enroulée, et à l'intérieur duquel un noyau de fer est monté; ce noyau étant muni d'une extrémité qui peut fermer en partie un passage tronconique en fonction du courant passant dans cette boine ($L_1$); la soupape (4; 4C, 4F; 4) laissant passer un débit maximum prédéterminé de fluide lorsqu'aucun courant n'est fourni à cette bobine ($L_1$).

4. Un système selon l'une des revendications précédentes, pour un congélateur ayant un seul compartiment destiné à la nourriture congelée, caractérisé en ce qu'il comprend d'autres moyens capteurs de température (7) pour détecter la température du condenseur (2).

5. Un système selon les revendications 2 et 4, dans lequel le circuit électronique de commande (10) est également conçu de façon à commander le fonctionnement d'un ventilateur de refroidissement (11) couplé au condenseur (2).

6. Un système selon les revendications 2 et 4, dans lequel ce circuit électronique de commande (10) est conçu de façon à entraîner la soupape de commande de débit (4; 4C, 4F; 4) de façon à maintenir la différence de température à travers l'évaporateur (5) à environ 6°C.

7. Un système selon la revendication 5, dans lequel un ventilateur de refroidissement (11) est relié au condenseur (2), et le circuit électronique de commande (10) est conçu de façon à entraîner cette soupape de commande de débit (4; 4C, 4F; 4) de manière à maintenir la différence de température à travers l'évaporateur (5) à environ 4°C au cours des phases de congélation pendant lesquelles la nourriture doit être congelée, et à environ 8°C au cours des phases normales de stockage; ce circuit électronique de commande (10) étant en outre conçu de façon à commander le fonctionnement de ce ventilateur (11) en fonction de la température détectée par lesdits autres moyens capteurs de température (7) et de la différence de température à travers l'évaporateur (5).

8. Un système selon la revendication 1, pour un appareil de refroidissement avec un condenseur immergé dans un conteneur (12) rampli d'eau auf peut être utilisé dans les salles de bain ou dans les cuisines, dans lequel ce circuit électronique de commande (10) est conçu de façon à entraîner le soupape de commandé de débit (4; 4C; 4F; 4) également en fonction de la température de l'eau de ce conteneur (12), de manière à maintenir la différence de température à travers l'évaporateur (5) à environ 6°C.

9. Un système selon la revendication 1, pour une pompe à chaleur comprenant un condenseur (2) immergé dans un conteneur (12) rempli d'eau qui peut être utilisé dans les salles de bain ou dans les cuisines, et un évaporateur (5) à l'air, dans lequel un ventilateur (11) est couplé à l'évaporateur (5) et ce circuit électronique de commande (10) est conçu de façon à entraîner cette soupape de commande de débit (4; 4C, 4F;

4) également en fonction de la température de l'eau dans ce conteneur (12), de manière à maintenir la différence de température à travers l'évaporateur (5) à environ 8°C; ce circuit électronique de commande (10) étant en outre conçu pour commander le fonctionnement de ce ventilateur (11) d'une manière prédéterminée en fonction de la température de l'air autour de l'évaporateur (5).

10. Un système selon la revendication 1, pour un appareil de refroidissement avec deux compartiments refroidis qui comprend un seul compresseur (1), un seul condenseur (2) et deux évaporateurs connectés en parallèle (5C; 5F) et deux soupapes de commande de débit réglables continûment (4C, 4F) connectées chacune en série avec un tube capillaire (3C; 3F) et l'un des évaporateurs (5C; 5F).

11. Un système selon la revendication 10, dans lequel lesdits moyens capteurs de température comprennent des capteurs de température (21—24) à l'entrée et à la sortie de chacun des évaporateurs (5C; 5F).

12. Un système selon la revendication 10, comprenant en outre un réservoir de stockage (19) pour le fluide réfrigérant à la sortie du condenseur (2), le circuit électronique de commande (10) étant conçu de façon à entraîner ces soupapes de commande de débit (4C; 4F) de manière à maintenir la différence de température à travers les évaporateurs (5C; 5F) à valeurs respectives prédéterminés, de préférence environ 4°C et 6°, respectivement.

13. Un système selon la revendication 1, pour un appareil de refroidissement avec deux compartiments de refroidissement (fr; cf) qui comprend un seul compresseur (1) et un premier et un second évaporateurs (5A; 5B) couplés en série, dans lequel lesdits moyens capteurs de température comprennent des capteurs de température (8, 9, 16, 18) à l'entrée et à la sortie du premier évaporateur (5A), ainsi qu'à la sortie du second évaporateur (5B) et dans le compartiment (cf) auquel le second évaporateur (5B) est associé.

14. Un système selon la revendication 13, dans lequel entre la sortie du premier évaporateur (5A) et l'entrée du second évaporateur (5B) un dispositif de séparation (15) est prévu, qui est conçu de façon à empêcher des gouttes de fluide réfrigérant d'entrer dans le second évaporateur (5B) pendant des étapes de fonctionnement prédéterminées.

15. Un système selon la revendication 14, dans lequel une portion (17) dudit tube capillaire (3) est enroulée autour de ce second évaporateur (5B), au moyen de laquelle au cours de phases de fonctionnement prédéterminées, de la chaleur peut être transférée à partir de ce tube capillaire (3) vers ce second évaporateur (5B).

16. Un système selon la revendication 15, dans lequel le circuit électronique de commande (10) est conçu de façon à entraîner la soupape de commande de débit (4) de manière à maintenir la différence de température à travers le premier et le second évaporateurs (5A, 5B) à environ 5°C et 8°C, respectivement.

17. Un système selon les revendications 3 et 16, dans lequel ce circuit électronique de commande (10) comprend un circuit intégré (102) conçu pour commander le courant fourni à la bobine ($L_1$) de cette soupape de commande de débit (4).

18. Un système selon la revendication 16 ou 17, dans lequel ce circuit électronique de commande (10) (figure 8) comprend un premier circuit ($A_4$, $AND_2$, $Q_4$) conçu pour empêcher le compresseur (101) d'être mis en marche avant que ce second évaporateur (5B) soit complètement dégivré.

19. Un système selon l'une des revendications 16 à 18, dans lequel ce circuit électronique de commande (10) comprend (figure 8) une résistance dégivrante (RS) couplés à ce second évaporateur (5B); ce circuit électronique de commande (10) étant conçu pour mettre en marche cette résistance dégivrante (RS) de façon à chauffer ce second évaporateur (5B) dans des conditions prédéterminées pour en accélérer le dégivrage.

20. Un système selon la revendication 18 ou 19, dans lequel ce circuit électronique de commande (10) comprend un second circuit ($A_1$, $A_2$, $A_3$; CS, $AND_1$; FF; $Q_4$) conçu pour commander la mise à l'arrêt de ce compresseur (101) en fonction de la différence de température à travers les évaporateurs (5A, 5B).

21. Un système selon la revendication 17, dans lequel ce circuit électronique de commande (10) comprend un commutateur ($RL_2$) couplé auxdits moyens capteurs de température ($U_1$, $U_2$) et conçu pour fournir des signaux de tension de seuil de référence commutables au circuit intégré (102), au moyen duquel ce circuit intégré (102) fait passer du courant dans la bobine ($L_1$), dont l'intensité dépend de ces signaux de tension de seuil.

22. Un système selon n'importe laquelle des revendications précédentes, dans lequel lesdits moyens capteurs de température comprennent deux résistances NTC à coefficient de température négatif, ou davantage.

# FIG. 1

# FIG. 3

3

R

C — 1

4

6

U — 9

5

I — 8

14

50°

12

13

2

# FIG. 2

8 — I

5

9 — U

6

1 — C

3

4 — R

10

I  T  U

U-I

7 — T

2

(U-I) T

11

n

# FIG. 4

# FIG. 5

# FIG. 6

# FIG. 7

EP 0 066 553 B1

FIG. 8

7